Europäisches Patentamt

(19) European Patent Office

Office européen des brevets

(11) Publication number: **0 241 977 B1**

(12) ## EUROPEAN PATENT SPECIFICATION

(45) Date of publication of patent specification :
10.07.91 Bulletin 91/28

(51) Int. Cl.⁵ : **G11B 20/18, G11B 20/02**

(21) Application number : 87200619.2

(22) Date of filing : 03.04.87

(54) Method of and arrangement for restoring invalid samples of an equidistantly sampled signal.

(30) Priority : 14.04.86 NL 8600931

(43) Date of publication of application :
21.10.87 Bulletin 87/43

(45) Publication of the grant of the patent :
10.07.91 Bulletin 91/28

(84) Designated Contracting States :
**DE FR GB SE**

(56) References cited :
EP-A- 0 139 803
WO-A-85/05723
DE-A- 3 233 389
GB-A- 2 090 106
IEEE COMMUNICATIONS MAGAZINE, vol. 23,
no. 2, February 1985, pages 7-15, New York,
US; J.B.H. PEEK: "Communications aspects
of the compact disc digital audio system"

(56) References cited :
ELECTRONIC COMPONENTS AND APPLI-
CATIONS, vol. 4, no. 3, May 1982, pages
131-141, Eindhoven, NL; S. MATULL: "ICs for
compact disc decoders"
GRUNDIG TECHNISCHE INFORMATIONEN,
vol. 27, no. 3, 1980, pages 150-153, Furth, DE;
K. SINGER: "Der Y-Baustein des Video 2x4

(73) Proprietor : N.V. Philips'
Gloeilampenfabrieken
Groenewoudseweg 1
NL-5621 BA Eindhoven (NL)

(72) Inventor : Veldhuis, Raymond Nicolaas Johan
c/o INT. OCTROOIBUREAU B.V. Prof.
Holstlaan 6
NL-5656 AA Eindhoven (NL)

(74) Representative : De Jongh, Cornelis
Dominicus et al
INTERNATIONAAL OCTROOIBUREAU B.V.
Prof. Holstlaan 6
NL-5656 AA Eindhoven (NL)

EP 0 241 977 B1

Jouve, 18, rue Saint-Denis, 75001 PARIS

## Description

The invention relates to a method of restoring samples of an equidistantly sampled signal, which samples are considered to be invalid, on the basis of correcting replacement values derived from an environment of samples which are considered to be valid and occur previous to and subsequent to an interval containing the samples to be restored, a sequence of consecutive samples $s_k$, wherein $k = 0, 1,..., N-1$ and comprising a set of samples to be restored being collected on the basis of an anticipated periodicity of the signal segment corresponding to this sequence of samples $s_k$ ; and on the basis of this sequence of samples $s_k$ a quantity q representing a number of samples, being determined, which quantity is a measure of the periodicity of said signal segment.

The invention also relates to an arrangement for performing such a method. Such a method and arrangement are disclosed in EP-A-0139803. According to this known method not only a quantity, and which is measure of the periodicity of a signal segment is determined, but also the frequencies of the neighbouring signal samples are determined.

Although this prior art proposition is suitable for recovering audio signals, such as music or speech, the bulk and complexity of the computational operations to be performed are such that it becomes problematical to satisfy with and economically justifiable structure the requirements imposed on performance properties of specific systems. More specifically, the prior art technique is less suitable for recovering signals in which comparatively long intervals, having an order of magnitude of, for example, 10 msec, and containing samples which must be considered as invalid, occur.

Generally, the invention has for its object to provide an alternative and simplified technique for the above-described technique of interpolating time-discrete signals which can be (further page 2, line 1) modelled as higher-order autoregressive procedures.

The object is, more specifically, to make available an interpolation technique which efficiently eliminates interference effects having the character of what is commonly referred to as selective fading. Mobile telephony systems, for example of the type usually denoted as MATS (Mobile Automatic Telephony Systems) are illustrative of systems in which such interference effects may occur.

At the receiver end of a transmission system forming part thereof, it is customary for a signal to be applied there in the form of an equidistantly sampled signal. Because of selective fading the received signal which, as a rule is a speech signal modulated on a carrier, drops out regularly and during certain intervals. Consequently a number of samples is unknown. In order to avoid or reduce observable interference effects in the ultimately obtained signal, it must be possible to restore the unknown samples which are considered invalid, on a real-time basis.

The invention is based on the recognition that whilst using a periodicity of the signal, a prediction procedure can be used which is significantly simplified compared with prior art prediction procedures, whereby a sample recovery system can be realised which satisfies the specific requirements imposed on performance and cost-price.

According to the invention, a method of the type defined in the opening paragraph, is characterized in that for a sub-sequence of consecutive samples $s_{t(i)}$, wherein $i = 1,..., m$, and which are considered invalid, a m-vector $\underline{z}$ is determined given by : $z_k = -a(s_{t(i)-nq} + s_{t(i)+nq})$, wherein $s_{t(i)-nq}$ and $s_{t(i)+nq}$, respectively represent a sample which is located in a position of nq samples before and after, respectively the $i^{th}$ sample $s_{t(i)}$, wherein n is an integer, and a represents a constant $-\frac{1}{2} < a < 0$ to be chosen ;

that a system of equations with a number of m unknowns, is formed by $G\hat{\underline{x}} = \underline{z}$ wherein G is a m x m matrix, given by

$$G_{kl} = \begin{cases} 1, & k=1 & k,l = 1, ..., m \\ a, & |t(k) - t(1)| = q & k,l = 1, ..., m \\ C, & \text{elsewhere} & k,l = 1, ..., m \end{cases}$$

wherein t(k) and t(l), respectively, represent the positions of the respective $k^{th}$ and $1^{st}$ invalid sample in the sequence $1,..., m$ and $\hat{\underline{x}}$ is an m-vector having the elements $\hat{x}_i$, wherein $\hat{x}_i$ is an estimator for an invalid sample in the position t(i), wherein $i = 1,..., m$ ; and

that from the system $G\hat{\underline{x}} = \underline{z}$ the m-values for $\hat{x}_i$ are solved in a manner known per se.

The invention can be used advantageously to restore a digitised speech signal of which a number of sample values is unknown because of interference. According to the invention, a method of restoring samples which form part of a substantially periodical signal sampled at a rate $f_s$, is characterised in that for the number N of

2

the samples $s_k$ wherein $k = 0,..., N-1$ such a value is chosen that $N = 2 f_s/f_{min} + m$, wherein $f_{min}$ represents the frequency which corresponds to the maximum anticipated periodicity of the signal segments to be restored and m represents the number of samples to be restored, contained therein.

In order to achieve optimum results, a method according to the invention is further characterised in that the sub-sequence of invalid samples $s_{t(i)}$ relative to the sequence of N samples $s_k$ is chosen such that it holds that

$$q_{max} \le t(i) \le N-1-q_{max},$$

wherein $q_{max}$ is a quantity represented by a number of samples and is a measure of the maximum anticipated periodicity of the signal segment represented by this sequence and $t(i)$ represents the position of the $i^{th}$ sample in said sub-sequence. This accomplishes that an interval comprising a set of samples to be restored is limited at the front and at the rear by an optimum appropriate environment of samples which can be considered as valid.

For the case in which the matrix G with the aid of which the system of equations having the estimators $\hat{x}_i$ for the samples $s_{t(i)}$ to be restored is described, appears to be a Toeplitz matrix whose three diagonals comprise coefficients for a value unequal to 0, it is advantageous to use a LU decomposition which is known <u>per se</u> for solving these unknowns. According to the invention the method is then characterized in that it is ascertained whether the number of m invalid samples is greater or less than the quantity $q + 1$ ;

that if $m \le q$, $\hat{x}$ is chosen equal to $\underline{z}$ and

that if $m \ge q + 1$, the matrix G is converted by means of LU decomposition into the product LU, wherein L and U respectively represents a lower triangular matrix and an upper triangular matrix, respectively, of m x m elements, the elements $L_{kk}$ and $U_{kk}$, respectively being equal to 1, wherein $k = 1,..., m$, it holding for the elements $U_{kk}$, $L_{k, k-q}$ and $U_{k, k+q}$ differing from zero that :

$$U_{kk} = 1 + c^2, \qquad\qquad\qquad k = 1, \ldots\ldots, q$$
$$U_{kk} = 1 + c^2 - c^2 / U_{k-q,k-q} \qquad k = q+1, \ldots\ldots, m$$
$$U_{k,k+q} = -c, \qquad\qquad\qquad k = 1, \ldots\ldots, m-q$$
$$L_{kk} = 1 \qquad\qquad\qquad\qquad k = 1, \ldots\ldots, q$$
$$L_{k,k-q} = -c/U_{k-q,k-q} \qquad\qquad k = q+1, \ldots\ldots, m$$

which is solved from the system $L\underline{y} = \underline{z}$, $\underline{y}$ in accordance with

$$Y_k = \begin{cases} z_k, & k = 1, \ldots\ldots\ldots, q \\ \\ z_k - L_{k,k-q} \, y_{k-q} & k = q+1, \ldots\ldots, q \end{cases}$$

which is solved from the system $U\hat{\underline{x}} = \underline{y}$, $\hat{\underline{x}}$ in accordance with

$$\hat{x}_{m+1-k} = \begin{cases} y_{m+1-k}/U_{m+1-k,m+1-k} & k = 1, \ldots\ldots, q \\ (y_{m+1-k} - U_{m+1-k,m+1-k+q} \cdot \hat{x}_{m+1-k+q}) \; \div \\ (U_{m+1-k,m+1-k}) & k = q+1, \ldots, m \end{cases}$$

A sample restoration arrangement of the type described in said Netherlands patent application generally includes detection means for designating samples elligible for restoration, and memory means for storing a sequence of consecutive samples which comprise a set of samples to be restored. Based on an arrangement of the said described type, an arrangement for performing the method according to the invention is characterised by first arithmetic means arranged for determining said quantity $\underline{q}$ starting from a set of samples which were detected as being valid and were stored in the memory means ;

second arithmetic means arranged for determining for samples in positions located at a distance of n.q samples before and after a sample in a position i, $s_{t(i)}$, the elements of the m-vector $\underline{z}$ and also for scaling these element values with the absolute value of said quantity a ;

third arithmetic means arranged for calculating in response to the inputting of output signals effected by the first and second arithmetic means, a number of $\underline{m}$ sampling substitution values as estimators for the samples to be recovered.

An embodiment which as regards components and operating rates is an advantageous embodiment of an arrangement for using a method according to the invention, is further characterised by a comparator for comparing the numerical values of the quantity m which represents the number of samples to be recovered and the numerical value of said quantity q, a command signal being produced when $m \geq q + 1$ ;

the third arithmetic means are arranged for converting, in response to the above-mentioned command signals, the matrix G by LU decomposition into the product LU, wherein L and U, respectively, represents a lower triangular matrix and an upper triangular matrix, respectively, of m x m elements, whose elements $L_{kk}$ and $U_{kk}$, respectively, are equal to 1, wherein k = 1..., m, and it holding for the elements $U_{kk}$, $L_{k, k-q}$ and $U_{k, k+q}$ differing from the value 0, that

$$
\begin{aligned}
U_{kk} &= 1 + c^2, & k &= 1, \ldots\ldots\ldots, q \\
U_{kk} &= 1 + c^2 - c^2 / U_{k-q,k-q} & k &= q+1, \ldots\ldots, m \\
U_{k,k+q} &= -c, & k &= 1, \ldots\ldots\ldots, m-q \\
L_{kk} &= 1 & k &= 1, \ldots\ldots\ldots, q \\
L_{k,k-q} &= -c/U_{k-q,k-q} & k &= q+1, \ldots\ldots\ldots, m.
\end{aligned}
$$

which is solved from the system $L\underline{y} = \underline{z}$, $\underline{y}$ in accordance with

$$
Y_k = \begin{cases} z_k, & k = 1, \ldots\ldots\ldots, q \\[2mm] z_k - L_{k,k-q}\, y_{k-q} & k = q+1, \ldots\ldots\ldots, q \end{cases}
$$

which is solved from the system $U\hat{\underline{x}} = \underline{y}$, $\hat{\underline{x}}$ in accordance with

$$
\hat{x}_{m+1-k} = \begin{cases} y_{m+1-k}/U_{m+1-k,m+1-k} & k = 1, \ldots\ldots, q \\[3mm] \dfrac{\left(y_{m+1-k} - U_{m+1-k,m+1-k+q} \cdot \hat{x}_{m+1-k+q}\right)}{\left(U_{m+1-k,m+1-k}\right)} & k = q+1, \ldots, m \end{cases}
$$

and that, when the command signal is not forthcoming, so for $m \leq q$, the third arithmetic means make $\hat{\underline{x}}$ equal to $\underline{z}$.

Based on the consideration that the matrix elements $U_{kk}$ and $L_{k, k-q}$ of the auxiliary matrices obtained by the LU decomposition appear to be constant through intervals of $\underline{q}$ consecutive values for the index $\underline{k}$, an arrangement for using a method according to the invention is further characterized by a Table memory for storing predetermined values of elements of the L matrix and the U matrix of the product LU.

The invention can be used advantageously in systems in which relatively long intervals up to approximately 12.5 msec., with invalid samples, occur in an applied signal.

Literature

(1) Pitch detection/determination of c L.R. Rabiner, R.W. Schafer, Digital Processing of Speech signals, Prentice Hall, 1978.

(2) LU decomposition / solving the system $G\hat{\underline{x}} = \underline{z}$ J.H. Wilkinson, Error analysis of direct methods of matrix inversion, J. Assoc. Comp. Mach. 8, 281-330.

The invention and how it can be put into effect will now be described in greater detail by way of example with reference to the accompanying drawing, in which :

Fig. 1 is a waveform diagram of an equidistantly sampled periodical signal, a portion of which contains unknown samples and with the aid of which the method according to the invention will be explained ;

Fig. 2 is a general block circuit diagram to illustrate the basic functions performed in a method according to the invention ;

Fig. 3 is a block circuit diagram to illustrate an embodiment of an arrangement for performing the method according to the invention ;

Fig. 4 is a flow chart illustrating the input/output program executed in the embodiment of Fig. 3 ; and

Fig. 5 is an illustration of the restoration program executed within the scope of the invention.

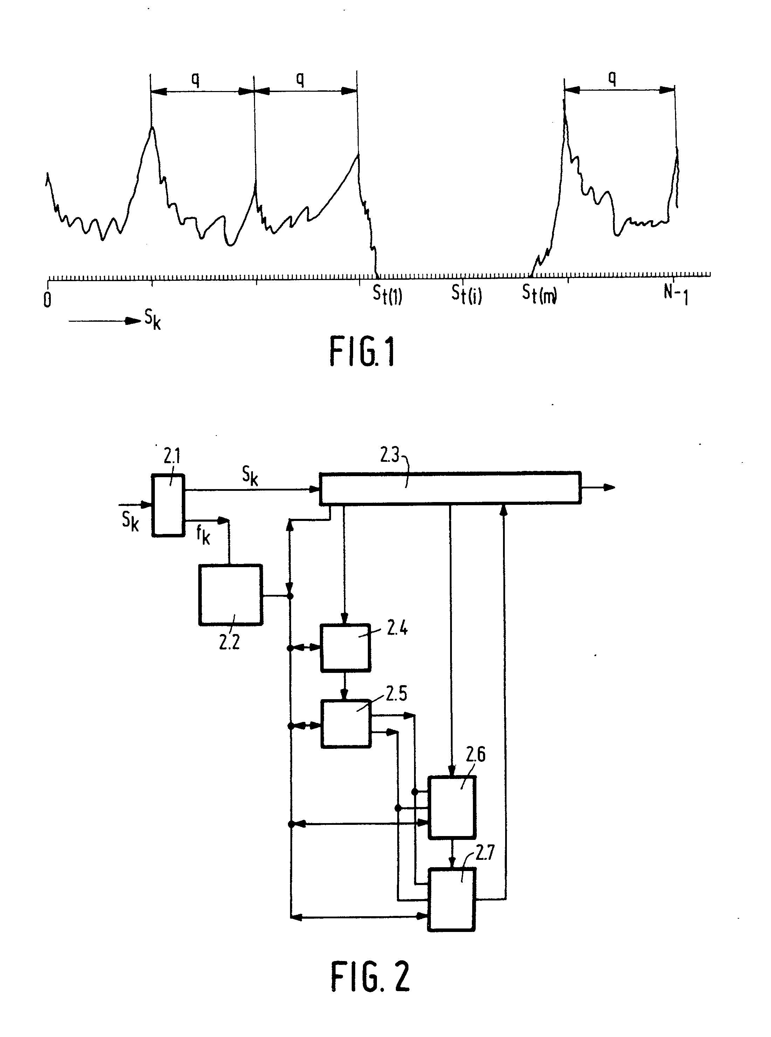

Fig. 1 shows schematically an equidistantly sampled speech signal defined as a sequence of consecutive samples $s_k$, wherein k = 0, 1,..., N-1. This signal contains a sequence of samples $s_{t(i)}$, wherein i = 1,..., m, which are considered as unknown and invalid. In accordance with the strategy on which the present invention is based, it is tried to substitute such estimators $\hat{x}_i$ for the unknown samples $s_{t(i)}$ that the reconstructed signal portion is matched as well as possible to the periodicity of the environment preceding and subsequent to the interval containing unknown samples.

Unknown samples in a time discrete signal can generally be estimated when the signal spectrum is known. In other words $S(\theta)$, $-\pi \leq \theta \leq \pi$, wherein $\theta$ is the normalised frequency of the signal, is known. The vector $\underline{x}$ of unknown samples is defined as

$$x_i = s_{t(i)}, \text{ wherein } i = 1,..., m.$$

The vector $\hat{\underline{x}}$ of estimators for the unknown samples is defined by

$$\hat{x}_i = \hat{s}_{t(i)}, \text{ wherein } i = 1,..., m,$$

wherein $\hat{s}_{t(i)}$ is an estimation of the unknown sample $s_{t(i)}$. Furthermore, the row $(g_k)$ is defined by

$$(1) \quad g_k = \frac{1}{2\pi} \int_{-\pi}^{\pi} \frac{1}{S(\theta)} \, e^{j\theta k} \cdot d\theta,$$

wherein $k = -\infty,..., \infty$

Then the what is commonly referred to as the syndrome vector $\underline{z}$ is defined by

$$(2) \quad z_k = -\sum_{l=-\infty}^{+\infty} g_{(t(k)-l)} \cdot s_l, \text{ wherein } k = 1, ..., m$$

wherein $1 \neq t(1),..., t(m)$

At the same time the m x m matrix G is defined by

$$(3) \quad G_{kl} = g_{t(k)-t(l)}, \text{ wherein } k, l = 1,..., m$$

The vector $\hat{\underline{x}}$ of the estimators for the unknown samples now is the solution of the system $G\hat{\underline{x}} = \underline{z}$.

An interpolation technique for autoregressive procedures as described in EP-A-01469 now follows from the equations given hereinbefore, by substituting for $S\theta$ in the equation given for $g_k$ the expression for the spectrum of an autoregressive procedure. Then the expression

$$(4) \quad g_k = \begin{cases} 0, & |k| > p \\ \sum\limits_{l=0}^{p-|k|} a_l a_l + |k|, & |k| \leq p \end{cases}$$

is obtained for $g_k$, wherein p represents the order of the auto-regressive procedure and $a_0,...,\ a_p$ represents the prediction coefficients.

Within the scope of the present invention a periodicity q in the signal is utilized. This results for the expression $g_k$ in the following

$$(5) \quad g_k = \begin{cases} 1, & k=0 \\ a = -\dfrac{c}{1+c^2}, & k=p=q \\ 0, & k \neq 0,\ k \neq q \end{cases}$$

wherein c is the periodicity coefficient known from the relevant literature.

From this the expression

$$(6) \quad Z_k = -a(s_{t(k)-q} + s_{t(k)+q}), \quad k = 1,..., m$$

follows for the above-mentioned syndrome vector $\underline{z}$ and for the matrix G

$$(7) \quad G_{kl} = \begin{cases} 1, & k=l & k,l = 1,\ ...,\ m \\ a, & |t(k) - t(l)| = q & k,l = 1,\ ...,\ m \\ 0, & \text{elsewhere} & k,l = 1,\ ...,\ m \end{cases}$$

As only the periodicity q of the signal is used, the complexity of the system of operations necessary to determine the estimators of the unknown samples is significiantly simplified. In addition to the fact that no prediction coefficients need to be calculated anymore, the row $g_k$ is simplified to the row $g_k$, wherein k = –q,..., q, of which only the elements $g_{-q}$, $g_0$ and $g_q$ have a value differing from zero.

At the same time it was found that for the constant coefficient c which is decisive for the scaling factor a, a value of 0.5 and 1.0 can be chosen for the restoration of speech samples.

The matrix defined by formula (3) is, when a consecutive sequence of samples to be restored is processed, a Toeplitz matrix so that the system $G\hat{\underline{x}} = \underline{z}$ can be solved in a simple way, for example by means of the Levinson algorithm which is known per se.

It has namely found to be acceptable to assume that the samples to be restored only occur as sequences of consecutive items. The restoration result is not significantly poorer when it is also assumed that non-contiguous patterns of invalid samples are considered as a contiguous sequence.

The quantity q which is a measure, represented by numbers of samples, of the periodicity of the signal segment constituting the environment preceding and subsequent to a time interval with unknown samples which are considered invalid can be determined in accordance with a technique which is known per se, for example a technique described in literature reference 1.

The general circuit diagram shown in Fig. 2 is representative of the set of basic functions which are to be performed to achieve that unknown samples which are considered invalid are replaced by estimators such that the signal segments reconstructed thereby fills the gap in the periodicity of the environment signals to the best possible extent. It is essential to the invention that a considered sequence of samples $s_k$, wherein k = 0,..., N-1, which contains a sub-sequence of unknown samples, contains at least so many valid samples that the periodicity of the signal segment represented by this sequence can be derived therefrom. In other words, in the first instance a sequence of consecutive samples $s_k$, containing a set of samples to be restored, must be collected on the basis of an anticipated periodicity of the signal segments represented by this sequence of samples $s_k$. Each signal sample $s_k$ is supplied in combination with a flag bit which indicates whether the relevant sample must be considered as being valid or not valid. A flag signal $f_k$ which is applied to a control unit 2.2 is derived from an applied sequence of signal samples $s_k$ by means of a flag bit recognizing arrangement 21. At the same time the applied signal samples are entered from the flag bit recognizing arrangement into a freely accessible register 2.3.

In response to the applied flag signal $f_k$ the control unit 2.2 is inter alia operative to so control the acquisition of signal samples $s_k$ that in the register 2.3 a number of N samples $s_k$ is collected at a given instant, with a pre-environment of valid samples, a gap having a number m of samples which must be considered as being invalid and a post-environment of valid samples. Preferably, all this is arranged such that the pre-environment and post-environment each contain the same number of valid samples, which number is chosen on the basis of an anticipated periodicity of the applied signals. When a speech signal is involved which, as is customary, is sampled at a frequency of 8000 Hz, this choice is based on an anticipated periodicity of not more than approximately 20 msec. This implies a pre-environment and a post-environment, respectively of at least 160 valid samples. It will be obvious that the time during which such a set of N signal samples remains stored in the register must be such that the estimators which were be substituted for the samples which are considered invalid, can be determined. After such a set formed from a number of consecutive samples $s_k$ has been produced in the above-described manner in the register 2.3, a quantity q must be determined which, expressed in a number of samples, is a measure of the periodicity of the signal segments represented by the samples stored in the register. For the sake of completeness, it should be noted that the total number of samples stored temporarily in the register for a restoration procedure, is always less than a number of samples corresponding to a time interval in which the relevant signal segment may be considered as being stationary.

For speech it has been found that the periodicity to be anticipated has a value in a range limited by 2 and 20 msec. For a speech signal sampled at a frequency of 8000 Hz, this means that the q values can be located in a range limited by the values 16 and 160 for the number of samples.

The blocks denoted in Fig. 2 by 2.4 and 2.5 perform the above-described function, i.e. the determination of the value q. To determine or estimate this periodicity, use can be made of a technique which is known per se. A technique is, for example, used in which the auto-correlation function of the relevant signal is estimated. Since, as described in the foregoing with reference to formula (5), use is made of a constant c, the procedure in which the above-mentioned value q is estimated need only to satisfy the requirement that the estimated auto-correlation function $r_k$ considered over an interval of q-values from $q_{min}$ to $q_{max}$, wherein $q_{min}$ and $q_{max}$, respectively, are the q values corresponding to the minimum and maximum anticipated periodicity, reaches it global maximum at k = q. The block denoted in Fig. 2 by 2.4 estimates the auto-correlation function of the signal segment stored in the register. To that end a pre-environment and a post-environment of the number of samples to be restored $s_{t(l)}$, wherein l = 1,..., m are read from the register 2.3 under the control of the control unit 2.2 and are entered into the function block 2.4. In this situation the number of environment samples n is given by the maximum periodicity to be anticipated of the relevant signal segment. As has been described in detail in the foregoing, for speech sampled at a frequency of 8000 Hz, this number is 160.

The auto-correlation function $r_k$ can be estimated by

$$(8) \quad r_k = \frac{1}{N} \sum_{l=0}^{N-k} s_l s_{l+k}, \qquad k = 0, \ldots, 160$$

Herein it is assumed that it relates to a speech signal. N represents the total number of samples $s_k$ stored in the register. The value 0 is substituted for the values $s_{t(1)},..., s_{t(m)}$. It appeared that the q-value searched for is that value of k for which $(r_k)$k = 16,..., 160 is at its maximum.

In this connection it should be noted that within the scope of the present invention no difference is made during the restoration of applied speech signals between voice speech and unvoiced speech. The block denoted in Fig. 2 by 2.5 is representative of the function in which from the auto-correlation function determined via block 2.4 the position expressed in the value of index k of the global maximum of the function $r_k$ is searched for. The k-value thus found then represents the quantity q searched for. At the same time the function block 2.5 supplies, each time a component $z_k$ of the syndrome factor $\underline{z}$ must be calculated, the scaling factor a required therefor. As will be apparent from formula (5), this scaling factor is a constant given by the chosen constant c. The block denoted in Fig. 2 by 2.6 performs the function in which, in accordance with formula (6), the components $z_k$ are determined. Under the control of the control unit 2.2 an environment determined by the found value q, of the samples $s_{t(l)}$ to be recovered is read from the register 2.3 and entered into the function block 2.6. As a result thereof the components $z_k$, wherein k = 1,..., m are determined because in accordance with formula (6) the relevant samples are added together pair-wise after scaling with the constant −a. In principle it is possible to determine these components $z_k$ using an integral multiple of the determined value q.

7

Under the control of the central control unit 2.2 the m-vector $\underline{z}$ determined by block 2.6 is entered, in combination with the quantities q and a, into the block denoted by 2.7. This block has for its function to establish a set of m equations with the data q, a and $\underline{z}$ entered therein, using $G_{kl}$ in accordance with formula (7), the m unknown estimators $\hat{x}_l$ and the syndrome vector $\underline{z}$ in accordance with formula (6) and scaled with the constant −a, and to solve the unknown estimators $\hat{x}_l$ from the set of equations thus formed. Under the control of the central control unit 2.2 the estimators $x_l$ generated by the block 2.7 are substituted for the samples $s_{t(l)}$ to be restored which were stored in the first instance in the register 2.3. Subsequently, the signal segment $S_{k-D}$ thus restored is read from the register 2.3 under the control of the control unit 2.2 so as to prepare the system for a subsequent restoration procedure.

The restored signal segment is read from the register after a fixed delay D after it was entered into the register, wherein D is the period of time in which the complete restoration procedure of the entered samples can be finished. The invention offers the possibility to restore within the standards imposed for the time interval D, comparatively long sequences of invalid samples. This means that in systems in which the selected fading phenomenon must be taken into account, interference intervals up to approximately 12 msec can be restored.

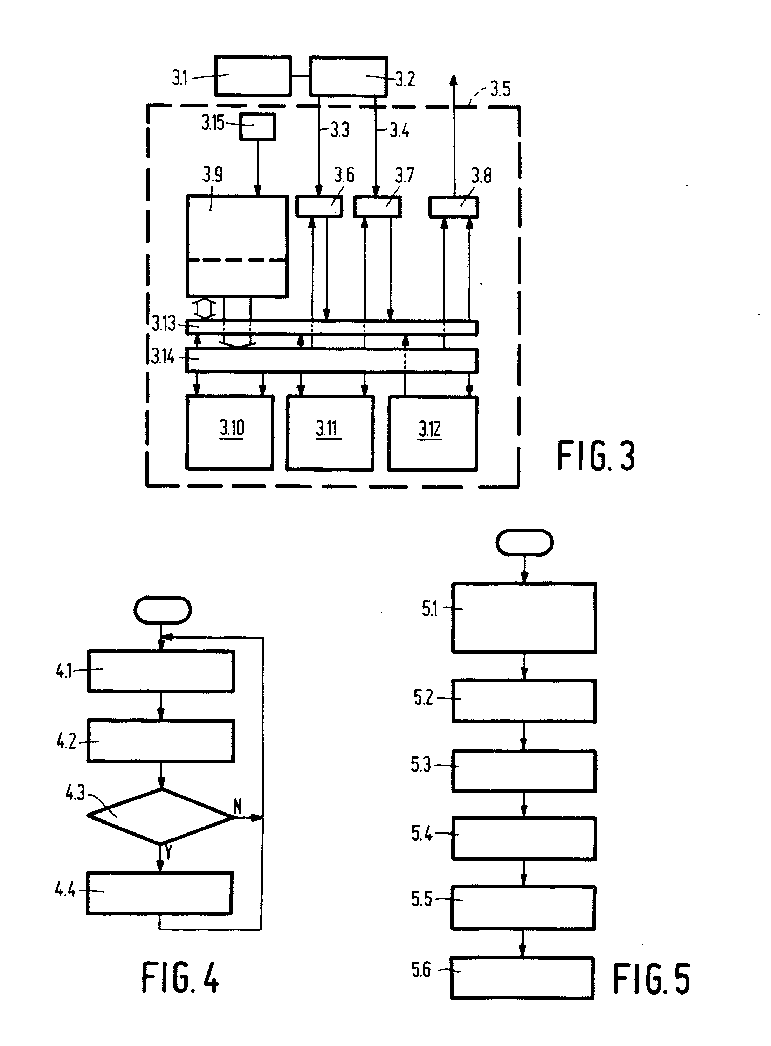

Fig. 3 shows a general block circuit diagram of an embodiment of an arrangement for performing the method according to the invention. The block 3.1 is a receiver which is of common usage in a MAT system for receiving a speech signal modulated on a carrier of, for example approximately 300 MHz. The output signal of this receiver is applied to a signal processor 3.2 which includes an error bit recognizing arrangement forming part thereof. This signal processor is arranged for supplying from the output 3.3 words containing n bits and are each representative of a sample of the speech signal received by the receiver. A sampling frequency customary for speech is a frequency of 8000 Hz so that the speech samples appear at the output 3.3 with 125 μ sec intervals. For each of the speech samples available at the output 3.3 a flag bit indicating whether the relevant sample must be considered to be valid or invalid is supplied from the output 3.4. The speech samples and the flag bit signals are applied to relevant input arrangements 3.6 and 3.7 of a microprocessor configuration denoted by 3.5 and arranged for substituting calculated estimators for sequences of invalid samples. In addition, an output arrangement 3.8 for outputting the values of the samples, a central processing arrangement 3.9 including a control section, a computational section and a logic section, and also three memories 3.10, 3.11 and 3.12 are part of this processor configuration 3.5. The memories 3.10 and 3.11 are random access memories, the memory 3.10 operating as a cyclic buffer memory and the memory 3.11 operating as a work memory for storing intermediate results. The memory 3.12 is a static memory in which the relevant programs which are to be passed through for effecting a restoration procedure are stored. The memories 3.10, 3.11 and 3.12 are coupled to the central processing unit 3.9 via a data bus line 3.3, through which 2-way data traffic can be passed between the processing unit 3.9 and its environment. For conveying addresses, the memories 3.10, 3.11 and 3.12 and also the arrangements 3.6, 3.7 and 3.8 are coupled to the central processing unit 3.9 via an address bus line 3.14. At the same time a clock 3.15 which determines the time regime under the control of which the central processing unit controls its functions, including inputting and outputting of data, is also part of the processor 3.5. Inputting and outputting data is effected under the control of a program stored in the program store 3.12. This program store 3.12 also contains the programs which are to be passed through for performing the functions described with reference to Fig. 2. The memory 3.10 then functions as the register denoted by 2.3 in Fig. 2, whilst the working store 3.11 contains inter alia a Table of addresses of the samples to be restored.

To simplify the complex of operations to be performed, the static memory 3.12 contains a program, which, after q has been determined in a known manner and $\underline{z}$ and curve a have been determined in the manner described in the foregoing, it is found that if m is less than or equal to q, $\hat{\underline{x}}$ is chosen equal to z and that if it is found that the number m of samples to be restored exceeds q a LU decomposition is started for the matrix $G_{kl}$. This simplifies the functions to be performed in connection with the block 2.7 of Fig. 2. As is generally known, a matrix G can be converted to a product in accordance with G = LU, when L represents a m x m matrix containing a lower triangle of which $L_{kk} = 1$ with k = 1,..., m and $L_{kl} = 0$ for $m \geq l > k \geq 1$ and U represents a m x m matrix containing an upper triangle, for which $U_{kl} = 0$, for $m \geq k > l \geq 1$, when k = 1,..., m.

The program is aimed at solving the number of m unknown estimators $\hat{x}_l$ as components of the m-vector $\underline{x}$ from the system of equations of the shape $G\hat{\underline{x}} = \underline{z}$, wherein G is given by $G_{kl}$ in accordance with formula (7) and the components $z_k$ of the m-vector $\underline{z}$ are given by $z_k$ in accordance with formula (6) by first solving $\underline{y}$ from the system $L\underline{y} = \underline{z}$ and thereafter solving $\hat{\underline{x}}$ from the system $U\hat{\underline{x}} = \underline{y}$, as is known from, for example, Reference 2. A further procedure according to the invention is as follows.

If it has been ascertained that the number m of samples to be restored exceeds q, wherein q is the quantity representing a number of samples and corresponds to the periodicity of the signal segment defined by the samples $s_k$, it appears that each of the matrices L, U is a 2-diagonal matrix, of which the elements $L_{kk}$, where k = l,..., m ; $l_{k, k-q}$, wherein k = q + l,..., m ; $U_{kk}$, wherein k = l,..., m and $U_{k, k+q}$, wherein k = l,..., m-q have a value differing from 0. On the basis thereof the elements $y_k$ of the m-vector $\underline{y}$ can be solved in accordance with

$$(9) \quad y_k = \begin{cases} z_k, & k = 1, \ldots, q \\ \\ z_k - L_{k,k-q} \, y_{k-q} & k = q+1, \ldots, q \end{cases}$$

and the elements of the m-vector $\hat{\underline{x}}$ can be solved in accordance with

$$(10) \quad \hat{x}_{m+1-k} = \begin{cases} y_{m+1-k}/U_{m+1-k,m+1-k} & , k = 1, \ldots, q \\ \\ \dfrac{\left(y_{m+1-k} - U_{m+1-k,m+1-k+q} \cdot \hat{x}_{m+1-k+q}\right) +}{\left(U_{m+1-k,m+1-k}\right)} & k = q+1, \ldots, m \end{cases}$$

For those elements of the matrices L, U whose value differs from 0 the following relations apply :

$$(11) \quad \begin{aligned} U_{kk} &= 1 + c^2, & k &= 1, \ldots, q \\ U_{kk} &= 1 + c^2 - c^2 / U_{k-q,k-q} & k &= q+1, \ldots, m \\ U_{k,k+q} &= -c, & k &= 1, \ldots, m-q \\ L_{kk} &= 1 & k &= 1, \ldots, q \\ L_{k,k-q} &= -c/U_{k-q,k-q} & k &= q+1, \ldots, m \end{aligned}$$

From the relations of formula (11) it is apparent that the elements $U_{kk}$ and $L_{k,k-q}$ remain constant over intervals given by q consecutive values of the index k, so that these elements can be designated by

$$(12) \quad \begin{aligned} U_{kk} &= U_{(k-1)+q+1} & k &= 1, \ldots, m \\ L_{k,k=1} &= 1_{(k-1)+q+1} & k &= q+1, \ldots, m \end{aligned}$$

wherein + indicates that integer numbers are divided, the residual term being ignored. This implies that the number of different values of $u_k$ wherein k = 1,..., (m − 1) + q + 1 is defined by (m − 1) + q and the number of different values of $l_k$, wherein k = 2,..., (m − 1)/q + 1 is given by (m − 1)/q. Using a system as described above, calculating the elements of the matrices L, U is an order of magnitude of 2 m/q operations, 2 m operations being required for the resubstitutions.

In a "fixed point" algorithm the simplification is permissible for utilising the sequence $g'_k = g_k/g_0$, wherein k = −q, ..., q, as all the elements have a value in the range from [−1, 1]. Herein $g_k$ is defined by the formulae (4) and (5), it holding for $g_0$ that $g_0 = 1 + c^2$ wherein $|c| \leq 1$. Using such a simplification the matrix G can be replaced by a matrix

$$(13) \quad G' = G/g_0 = LU' = LU/g_0$$

wherein L and U represent the matrices L and U defined in the foregoing. For the diagonal elements $U'_{kk}$ wherein k = 1,..., m of the matrix U' the following limits hold :

$$(14) \quad \tfrac{1}{2} < 1/(1 + c^2) \leq U'_{kk} \leq 1, \; k = 1, \ldots, m$$

As is obvious from formula (10), the elements $U_{kk}$ or $U'_{kk}$, wherein k = 1,..., m must be considered to be dividers, which in a "fixed point" implementation may cause inaccuracies at low values. In view of the circumstances that $U'_{kk}$ is limited between the values 1 and $\tfrac{1}{2}$, the maximum number of bits can be used for each divider $U'_{kk}$, wherein k = 1,..., m. In addition it is found that all the elements of the matrices L and U' have a value within the range [-1, 1], which implies that for a "fixed point" implementation no additional scaling is required.

9

A further simplification is obtained by considering the factor c to be a constant value $c = c_f$. It is found that a value $c_f$ of, for example, approximately 0.7 yields good results.

Starting from a chosen fixed value for the factor c the coefficient $u_k$ or $u'_k = u_k/g_0$, wherein $k = 1,..., (m-1) + q + 1$ and $l_k$, wherein $k = 2,..., (m-1) + q + 1$ can be calculated previously and the values thus calculated can be stored in a Table memory for a predetermined maximum value of $(m-1) + q$. This ratio can, for example, be determined from $(m_{max} - 1) + q_{min} + 1$. For speech sampled at a frequency of 8000 Hz it then holds that 99 + 16 is approximately equal to 6.

Solving the system of equations as defined by $G\hat{\underline{x}} = \underline{z}$ is then simplified to a back substitution procedure as proposed by the equations (9) and (10).

Because of the interaction of the central control unit 3.9 and the available memories 3.10, 3.11 and 3.12, this back-substitution procedure can effectively be implemented starting from the previously found data q, a and the elements $z_k$.

At the same time it was found within the scope of the present invention, that the techniques describes in the foregoing can be successfully used, also when non-voiced speech must be recovered. For non-voiced speech a certain periodicity is calculated and the estimation for the quantity q has an arbitrary value. This means that for non-voiced speech a noisy signal is substituted in the positions of invalid samples. A significant advantage of such an approach is that for a restoration procedure for speech it is not necessary to decide whether a speech signal segment to be restored relates to voiced or non-voiced speech.

The static memory 3.12 of the embodiment shown in Fig. 3 is programmed such that the algorithm for recovering a signal segment containing invalid samples can be implemented. As was described in detail in the foregoing such an implementation actually means an estimation of the quantity q determinating the syndrom vector $\underline{z}$ and double back-substitution for the solution of the system of equations of the shape $G\underline{x} = \underline{z}$. For the sake of completeness, it should be noted that, since a constant value was chosen for the quantity c, a 2-level correlator which is known per se can be used for estimating the quantity q to accelerate the procedure. Such a correlation is arranged for calculating the auto-correlation function of a sequence of the shape

$$(15) \quad C(s_k) = \begin{cases} 1 & s_k > c_1 s_{max} \\ 0 & |s_k| < c_1 s_{max} \\ -1 & s_k > c_1 s_{max}, \quad k = 0, \ldots, N-1 \end{cases}$$

wherein $s_{max}$ represents the maximum absolute value of $s_k$, wherein $k = 0,..., N-1$. The value 0 is here filled-in for the values of the invalid samples $s_{t(1)},..., s_{t(m)}$. Such a correlator can be realised in a simple manner in the form of an up/down counter controlled by the result of the multiplication $C(s_k)C(s_{k+j})$.

The invention can be advantageously used for restoring time-discrete speech signals. Obviously the invention is also applicable to analog speech signals when these signals are first made discrete. The invention is also applicable to, for example, the restoration of speech signals which during transmission were protected by an error-correcting and error-detecting code. In such a situation those samples can be restored which can indeed be detected as an error, but which cannot be corrected anymore.

An embodiment of a sample-restoration system according to the invention is further illustrated by the flow-chart of Fig. 4. This flow-chart is illustrative of the program stored in the program store 3.12 and controlling inputting and outputting of data. The program can be described as follows : for captions see Table 1.

– block 4.1 caption : "wait for interrupt", description : data can be inputted and outputted during an interrupt, that is to say when a clock pulse from data clock 3.15 appears,

– block 4.2 caption : "output/input", description : at the appearance of a clock pulse the value of a new sample is inputted via input 3.6 and written in the memory 3.10 at the first free address and the oldest sample in the memory 3.10 is read and outputted.

– block 4.3, caption : "input error ?", description : when entering a new sample, also the error flag is entered via input 3.7. If no invalid sample is detected, then the subsequent clock pulse is awaited for repeating the procedure.

– block 4.4 caption : "update error table", description : if a sample is detected as being invalid, the address of the sample in the memory 3.10 is entered into a table of invalid samples in the working store 3.11.

Acting thus, the cyclic buffer memory 3.10 operates as a delay line, the delay being determined by the period of time necessary for one restoration cycle, measured from the instant at which the first invalid sample was inputted up to and including the correction of the last invalid sample. The program, stored in the memory 3.12, with which the replacement values of the invalid samples are calculated, is started when the input/output program detects an invalid sample.

This restoration program will be described in detail with reference to Fig. 5, which shows a flow chart which is illustrative of this program (for captions see table 2).

– block 5.1, caption : "wait for an error pattern that can be restored", description : as long as no pattern of invalid samples is detected, the restoration program is at a stand-still.

– block 5.2, caption : "set invalid sample values to zero and compute q and a", in order to have, after the invalid samples, indeed the value of these samples, given the periodicity of the signal segment whose estimation is proposed by the samples in this interval, auto-correlation coefficients $r_k$ are computed, which are defined by

$$(8) \quad r_k = \frac{1}{N} \sum_{l=0}^{N-k} s_l s_{l+k}, \qquad k = 0, \ldots, 160$$

Computing the products $S_l S_{l+k}$ can be effected in a fast manner by reducing, in accordance with formula (15), the quantization degree of the samples. The constant a is calculated from

$$a = -\frac{c}{1 + c^2}$$

wherein c is a constant value, for example 0.68.

– block 5.3, caption : "compute G". This implies the formation of a m x m Toeplitz matrix, whose elements are given by

$$(7) \quad G_{kl} = \begin{cases} 1, & k=l & k,l = 1, \ldots, m \\ a, & |t(k) - t(l)| = q & k,l = 1, \ldots, m \\ 0, & \text{elsewhere} & k,l = 1, \ldots, m \end{cases}$$

– block 5.4, caption "compute syndrome". Herein the components $z_k$ of the m-vector $\underline{z}$ are computed, these components being given by :

$$(6) \quad Z_k = -a(s_{t(k)-q} + s_{t(k)+q}), \quad k = 1, \ldots, m$$

Then, samples which are located q samples before and after the relevant invalid sample $S_t(k)$ are added together after scaling.

– block 5.5, caption : "solve missing samples". Description : the replacement values of the invalid samples $s_{t(l)}, \ldots, s_{t(m)}$ are computed by solving the system $G\hat{\underline{x}} = \underline{z}$. This system is solved using a program for solving a system of m equations with m unknowns in accordance with the above-described LU-decomposition method.

– block 5.6, the values of the invalid samples which were set to zero in the memory 10, are now replaced by the estimated values $\hat{s}_{t(l)}, \ldots, \hat{s}_{t(m)}$. Thereafter the program is again cycled through.

Tables:

Table 1:

Captions flow chart Fig. 4

| block number | caption |
| --- | --- |
| 4.1 | "wait for interrupt" |
| 4.2 | "output/input" |
| 4.3 | "input error?" |
| 4.3 | "update error table" |

Table 2:

Captions flow chart Fig. 5.

| block number | caption |
| --- | --- |
| 5.1 | "wait for an error pattern that can be restored" |
| 5.2 | "compute q and a" |
| 5.3 | "set invalid sample values to zero and compute G" |
| 5.4 | "compute syndrome" |
| 5.5 | "solve missing samples" |
| 5.6 | "update buffer" |

$$(1) \quad g_k = \frac{1}{2\pi} \int_{-\pi}^{\pi} \frac{1}{S(\theta)} e^{j\theta k} \cdot d\theta \quad, \text{ with } k = -\infty, \cdots, \infty$$

$$(2) \quad z_k = -\sum_{l=-\infty}^{\infty} g_{t(k)-l} \cdot s_l \quad, \text{ with } k = 1, ---, m$$

$$l \neq t(1), ------, t(m)$$

$$(3) \quad G_{kl} = g_{t(k)-t(l)} \quad, \text{ with } k, l = 1, -----, m$$

$$(4) \quad g_k = \begin{cases} 0, & |k| > p \\ \sum_{l=0}^{p-|k|} a_l a_{l+|k|}, & |k| \leq p \end{cases}$$

$$(5) \quad g_k = \begin{cases} 1, & k=0 \\ a = -\dfrac{c}{1+c^2}, & k=p=q \\ 0, & k \neq 0, k \neq q \end{cases}$$

$$(6) \quad Z_k = -a \left( s_{t(k)-q} + s_{t(k)+q} \right) \quad, \quad k = 1, ------, m$$

$$(7) \quad G_{kl} = \begin{cases} 1, & k=l & k,l = 1, ----, m \\ a, & |t(k)-t(l)| = q & k,l = 1, ----, m \\ 0, & \text{elsewhere} & k,l = 1, ----, m \end{cases}$$

$$(8) \quad r_k = \frac{1}{N} \sum_{l=0}^{N-k} s_l s_{l+k} \quad, \quad k = 0, -----, 160$$

$$(9) \quad Y_k = \begin{cases} z_k, & k=1,\,-----,\,q \\ z_k - L_{k,k-q}\, y_{k-q}, & k=q+1,\,----,\,m \end{cases}$$

$$(10) \quad \hat{x}_{m+1-k} = \begin{cases} y_{m+1-k}/U_{m+1-k,\,m+1-k}, & k=1,\,----\,q \\ (y_{m+1-k} - U_{m+1-k,\,m+1-k+q}\cdot \hat{x}_{m+1-k+q})/U_{m+1-k,\,m+1-k}, & k=q+1,\,---,\,m \end{cases}$$

$$(11) \quad \begin{aligned} U_{kk} &= 1+c^2, & k &= 1,\,-----,\,q \\ U_{kk} &= 1+c^2-c^2/U_{k-q,\,k-q}, & k &= q+1,\,----,\,m \\ U_{k,\,k+q} &= -c, & k &= 1,\,------,\,m-q \\ L_{kk} &= 1, & k &= 1,\,------,\,q \\ L_{k,\,k-q} &= -c/U_{k-q,\,k-q}, & k &= q+1,\,----,\,m \end{aligned}$$

$$(12) \quad \begin{aligned} U_{kk} &= U_{(k-1)\div q+1}, & k &= 1,\,------,\,m \\ L_{k,\,k=q} &= l_{(k-1)\div q+1} & k &= q+1,\,------,\,m \end{aligned}$$

$$(13) \quad G' = G/g_0 = LU' = LU/g_0$$

$$(14) \quad \tfrac{1}{2} < 1/(1+c^2) \leq U'_{kk} \leq 1, \qquad k = 1,\,-----\,m$$

$$(15) \quad C(s_k) = \begin{cases} 1 & s_k > c_1 s_{max} \\ 0 & |s_k| < c_1 s_{max} \\ -1 & s_k > c_1 s_{max}, \ k=0,\,------,\,N-1 \end{cases}$$

## Claims

1. A method of restoring samples of an equidistantly sampled signal which samples are considered to be invalid, on the basis of correcting replacement values derived from an environment of samples which are considered to be valid and occur at an interval containing the samples to be restored, a sequence of consecutive samples $s_k$, wherein $k = 0,1,..., N-1$ and comprising a set of samples to be restored being collected on the basis of an anticipated periodicity of the signal segment corresponding to this sequence of samples $s_k$ ;

and on the basis of this sequence of samples $s_k$ a quantity q representing a number of samples, being determined, which quantity is a measure of the periodicity of said signal segment ; characterized in that for a sub-sequence of consecutive samples $s_{t(i)}$ wherein $i = 1,..., m$, and which are considered invalid, a m-vector $\underline{z}$ is determined given by : $Z_k = -a(s_{t(i)-nq} + s_{t(i)+nq})$, wherein $s_{t(i)-nq}$ and $s_{t(i)+nq}$, respectively, represent a sample which is located in a position of nq samples before and after, respectively, the $i^{th}$ samples $s_{t(i)}$, wherein n is an integer, and wherein a represents a constant $-\frac{1}{2} < a < 0$ to be chosen ;

that a system of equations with a number m of unknown quantities, is formed by $G\hat{\underline{x}} = \underline{z}$ wherein G is a m x m matrix, given by

$$G_{kl} = \begin{cases} 1, & k=l \\ a, & |t(k) - t(l)| = q \\ 0, & \text{elsewhere} \end{cases} \qquad \begin{array}{l} k,l = 1, ....., m \\ k,l = 1, ....., m \\ k,l = 1, ....., m \end{array}$$

wherein t(k) and t(l) respectively, represent the positions of the respective $k^{th}$ and $l^{st}$ invalid sample in the sequence $l,..., m$ and $\hat{\underline{x}}$ is an m-vector containing the elements $\hat{x}_i$, wherein $\hat{x}_i$ is an estimator for an invalid sample in the position t(i), wherein $i = 1,..., m$, and

that from the system $G\hat{\underline{x}} = \underline{z}$ the m-values for $\hat{x}_i$ are solved in accordance with a manner known per se.

2. A method as claimed in Claim 1, in which the samples to be restored are part of a signal which is sampled at a rate $f_s$, characterized in that for the number N of the samples $s_k$ wherein $k = 0,..., N-1$ a value is chosen such that

$$N = 2 f_s/f_{min} + m$$

wherein $f_{min}$ represents the frequency which corresponds to the maximum anticipated periodicity of the signal segment to be restored and m represents the number of samples to be restored contained therein.

3. A method as claimed in Claim 2, characterized in that the sub-sequence of invalid samples $s_{t(i)}$ relative to the sequence of N samples $s_k$ are chosen such that it holds that :

$$q_{max} \leq t(i) \leq N-1-q_{max},$$

wherein $q_{max}$ is a quantity, represented by a number of samples, which is a measure of the maximum periodicity to be anticipated of the signal segment represented by this sequence and t(i) represents the position of the $i^{st}$ sample in said sub-sequence.

4. A method as claimed in any one of the preceding Claims, characterized in that

it is determined whether the number m invalid samples exceeds or is less than the quantity q + 1 ;

if $m \leq q$, $\hat{x}$ is chosen equal to $\underline{z}$, and

if $m \geq q + 1$, the matrix G is converted by LU-decomposition into the product LU, wherein L and U, respectively, represent a lower triangular matrix and an upper triangular matrix, respectively, of m x m elements, whose elements $L_{kk}$ and $U_{kk}$, respectively, are equal to 1 wherein $k = 1,..., m$, and it holding for the elements which differ from this value 0 that

$$U_{kk} = 1 + c^2, \qquad\qquad k = 1, \ldots\ldots\ldots, q$$
$$U_{kk} = 1 + c^2 - c^2 / U_{k-q,k-q} \qquad k = q+1, \ldots\ldots, m$$
$$U_{k,k+q} = -c, \qquad\qquad k = 1, \ldots\ldots\ldots, m-q$$
$$L_{kk} = 1 \qquad\qquad k = 1, \ldots\ldots\ldots, q$$
$$L_{k,k-q} = -c/U_{k-q,k-q} \qquad k = q+1, \ldots\ldots, m$$

that from the system $L\underline{y} = \underline{z}$, $\underline{y}$ is solved in accordance

$$y_k = \begin{cases} z_k{}' & k = 1, \ldots\ldots\ldots, q \\[2ex] z_k - L_{k,k-q}\, y_{k-q} & k = q+1, \ldots\ldots, q \end{cases}$$

that from the system $U\hat{\underline{x}} = \underline{y}$, $\hat{\underline{x}}$ is solved in accordance with

$$\hat{x}_{m+1-k} = \begin{cases} y_{m+1-k}/U_{m+1-k,m+1-k} & k = 1, \ldots\ldots, q \\[3ex] \dfrac{\left(y_{m+1-k} - U_{m+1-k,m+1-k-k+q} \cdot \hat{x}_{m+1-k+q}\right)}{\left(U_{m+1-k,m+1-k}\right)} & k = q+1, \ldots\ldots, m \end{cases}$$

5. An arrangement for performing a method as claimed in Claim 1, comprising detection means which indicate whether an applied sample must be considered as being valid or as being not valid, and storage means for storing a sequence of consecutive samples, which includes a set of samples to be restored, characterized by

first computing means arranged for determining said quantity q starting from a set of samples which are detected as being valid and are stored in the storage means ;

second computing means arranged for determining for samples and positions located at a distance of n · q samples before and after a sample, $s_{i(l)}$, located in a position i the elements of the m-vector $\underline{z}$, and also to scale these element values with the absolute value of said quantity a ;

third computing means arranged for imputing a number of m sample replacement values as estimated for the samples to be restored in response to the inputting of output signals, effected by the first and second computing means.

6. An arrangement as claimed in Claim 5, characterized by a comparator for comparing the numerical values of the quantity m, which represent the number of samples to be restored, and the numerical value of said quantity q, a command signal being produced when $m \geq q + 1$,

the third computing means being arranged to convert in response to such a command signal the matrix G by means of LU-decomposition into the product LU, wherein L and U, respectively, represent a lower triangular matrix and an upper triangular matrix, respectively, of m x m elements, whose elements $L_{kk}$ and $U_{kk}$, respectively are equal to 1 wherein k = 1,..., m, it holding for the elements differing from the value 0 that

$$U_{kk} = 1 + c^2, \qquad\qquad k = 1, \ldots\ldots\ldots, q$$
$$U_{kk} = 1 + c^2 - c^2 / U_{k-q,k-q} \qquad k = q+1, \ldots\ldots, m$$
$$U_{k,k+q} = -c, \qquad\qquad k = 1, \ldots\ldots\ldots, m-q$$
$$L_{kk} = 1 \qquad\qquad k = 1, \ldots\ldots\ldots, q$$
$$L_{k,k-q} = -c/U_{k-q,k-q} \qquad k = q+1, \ldots\ldots, m$$

that from the system $L\underline{y} = \underline{z}$, $\underline{y}$ is solved in accordance with

$$y_k = \begin{cases} z_k, & k = 1, \ldots\ldots, q \\ \\ z_k - L_{k,k-q}\, y_{k-q} & k = q+1, \ldots\ldots, q \end{cases}$$

that from the system $U\hat{\underline{x}} = \underline{y}$, $\hat{\underline{x}}$ is solved in accordance with

$$\hat{x}_{m+1-k} = \begin{cases} y_{m+1-k}\big/ U_{m+1-k,\,m+1-k} & k = 1, \ldots\ldots, q \\ \\ \dfrac{\left(y_{m+1-k} - U_{m+1-k,\,m+1-k+q} \cdot \hat{x}_{m+1-k+q}\right) +}{\left(U_{m+1-k,\,m+1-k}\right)} & k = q+1, \ldots\ldots, m \end{cases}$$

7. An arrangement as claimed in Claim 6, characterized by a Table memory for storing predetermined values or elements of the L-matrix and the U-matrix of the product LU.

**Patentansprüche**

1. Verfahren zum Wiederherstellen als ungültig betrachteter Abtastwerte eines in gleichen Abständen abgetasteten Signals auf Basis korrigierender Ersatzwerte, die aus einer Umgebung als gültig betrachteter Abtastwerte abgeleitet werden, und die bei einem Intervall mit wiederherzustellenden Abtastwerten auftreten, wobei eine Reihe aufeinanderfolgender Abtastwerte $s_k$, mit $k = 0, 1, ..., N-1$ und mit einem Satz wiederherzustellender Abtastwerte auf Basis einer zu erwartenden Periodizität des dieser Reihe von Abtastwerten $S_k$ entsprechenden Signalsegmentes gesammelt wird ;
und wobei auf Basis dieser Reihe von Abtastwerten $s_k$ eine eine Anzahl Abtastwerte darstellende Größe q bestimmt wird, die ein Maß für die Periodizität des genannten Signalsegmentes ist, **dadurch gekennzeichnet,** daß für eine Teilreihe aufeinanderfolgender, als ungültig betrachteter Abtastwerte $s_{t(i)}$, mit $i = 1,..., m$, ein m-Vektor $\underline{z}$ bestimmt wird, der durch die folgende Formel gegeben ist $z_k = -a(s_{t(i)-nq} + s_{t(i)+nq})$, wobei $s_{t(i)-nq}$ und $s_{t(i)+nq}$ einen Abtastwert darstellen, der sich an einer Stelle von nq-Abtastwerten vor bzw. nach dem i. Abtastwert $S_{t(i)}$ befindet, wobei n eine ganze Zahl ist und wobei a eine zu wählende Konstante $-\tfrac{1}{2} < a < 0$ darstellt ;
daß ein System von Gleichungen mit einer Anzahl m unbekannter Größen durch $G\hat{\underline{x}} = \underline{z}$ gebildet wird, wobei G eine m x m Matrix ist, die durch die nachfolgende Formel gegeben ist :

$$G_{kl} = \begin{cases} 1, \ k=1 & k,l = 1, ..., m \\ a, \ |t(k) - t(l)| = q & k,l = 1, ..., m \\ 0, \ \text{sonstwo} & k,l = 1, ..., m \end{cases}$$

wobei t(k) und t(l) die Stelle des k. bzw. 1. ungültigen Abtastwertes in der Reihe 1,..., m darstellen und wobei $\hat{x}$ ein m-Vektor ist, der die Elemente $\hat{x}_i$ ist, wobei $x_i$ eine Schätzfunktion für einen ungültigen Abtastwert an der Stelle t(i) ist, wobei $i = 1,..., m$ ist und
daß aus dem System $G\hat{\underline{x}} = \underline{z}$ die m-Werte für $\hat{x}_i$ ; entsprechend einer an sich bekannten Art und Weise gelöst werden.

2. Verfahren nach Anspruch 1, wobei die wiederherzustellenden Abtastwerte einen Teil eines mit einer Frequenz $f_s$ abgetasteten Signals bilden, **dadurch gekennzeichnet,** daß für die Anzahl N der Abtastwerte $S_k$ mit k

= 0,..., N-1, ein derartiger Wert gewählt wird, daß

$$N = 2 f_s/f_{min} + m \text{ ist}$$

wobei $f_{min}$ die Frequenz darstellt, die der maximal zu erwartenden Periodizität des wiederherzustellenden Signalsegmentes entspricht und m die Anzahl darin auftretender wiederherzustellender Abtastwerte darstellt.

3. Verfahren nach Anspruch 2, <u>dadurch gekennzeichnet</u>, daß die Teilreihe ungültiger Abtastwerte $S_{t(i)}$ in bezug auf die Reihe von N Abtastwerten $s_k$ derart gewählt wird, daß gilt, daß

$$q_{max} \leq t(i) \leq N-1-q_{max}$$

wobei $q_{max}$ eine durch eine Anzahl Abtastwerte dargestellte Größe ist, die ein Maß für die maximal zu erwartende Periodizität des durch diese Reihe dargestellten Signalsegmentes ist und wobei $t(i)$ die Stelle des i. Abtastwertes in der genannten Teilreihe ist.

4. Verfahren nach einem der vorstehenden Ansprüche, <u>dadurch gekennzeichnet,</u> daß ermittelt wird, ob die Anzahl m ungültiger Abtastwerte größer oder kleiner ist als die Größe q + 1 ;
wenn $m \leq q$ ist, $\hat{x}$ gleich $\underline{z}$ gewählt wird, und
wenn $m \geq q + 1$ ist, die Matrix G durch LU-Zerlegung in das Produkt LU umgewandelt wird, in dem L bzw. U eine Unterdreiecksmatrix bzw. eine Oberdreiecksmatrix von m x m Elementen ist, wobei die Elemente $L_{kk}$ und $U_{kk}$ gleich 1 sind mit k = 1,..., m, und wobei für die vom Wert 0 abweichenden Elemente gilt, daß

$$
\begin{aligned}
U_{kk} &= 1 + c^2, & k &= 1, \ldots, q \\
U_{kk} &= 1 + c^2 - c^2/U_{k-q,k-q} & k &= q+1, \ldots, m \\
U_{k,k+q} &= -c, & k &= 1, \ldots, m-q \\
L_{kk} &= 1 & k &= 1, \ldots, q \\
L_{k,k-q} &= -c/U_{k-q,k-q} & k &= q+1, \ldots, m
\end{aligned}
$$

daß aus dem System $L\underline{y} = \underline{z}$, $\underline{y}$ gelöst wird und zwar entsprechend

$$
y_k = \begin{cases}
z_k, & k = 1, \ldots, q \\
\\
z_k - L_{k,k-q}\, y_{k-q} & k = q+1, \ldots, q
\end{cases}
$$

daß aus dem System $U\hat{\underline{x}} = \underline{y}$, $\hat{\underline{x}}$ gelöst wird und zwar entsprechend

$$
\hat{x}_{m+1-k} = \begin{cases}
y_{m+1-k}/U_{m+1-k,m+1-k} & k = 1, \ldots, q \\
\\
\dfrac{(y_{m+1-k} - U_{m+1-k,m+1-k+q} \cdot \hat{x}_{m+1-k+q}) +}{(U_{m+1-k,m+1-k})} & k = q+1, \ldots, m
\end{cases}
$$

5. Anordnung zum Durchführen eines Verfahrens nach Anspruch 1, mit Detektionsmitteln, die angeben, ob ein angebotener Abtastwert als gültig oder als ungültig betrachtet werden muß, und mit Speichermitteln zum Speichern einer einen Satz wiederherzustellender aufeinanderfolgender Abtastwerte aufweisenden Reihe, <u>gekennzeichnet durch</u>

erste Rechenmittel, die dazu eingerichtet sind, ausgehend von einem Satz als gültig detektierter und in den Speichermitteln gespeicherter Abtastwerte, die genannte Größe q zu ermitteln ;
zweite Rechenmittel, die dazu eingerichtet sind, für Abtastwerte an Stellen, die in einem Abstand von n · q Abtastwerten vor und nach einem an einer Stelle i befindlichen Abtastwert $S_{i(i)}$ entfernt sind, die Elemente des m-Vektors $\underline{z}$ zu ermitteln, sowie diese Elementwerte mit dem Absolutwert der genannten Größe a zu skalieren ;

dritte Rechenmittel, die dazu eingerichet sind, infolge der Einfuhr von Ausgangssignalen, verursacht durch die ersten und zweiten Rechenmittel, eine Anzahl m Abtastwertersatzwerte als Schätzfunktionen für die wiederherzustellenden Abtastwerte zu berechnen.

6. Anordnung nach Anspruch 5, <u>gekennzeichnet durch</u> eine Vergleichsschaltung zum Vergleichen des Zahlenwertes der die Anzahl wiederherzustellender Abtastwerte darstellenden Größe m mit dem Zahlenwert der genannten Größe q, wobei ein Befehlssignal erzeugt wird, wenn $m \geq q + 1$ ist,

wobei die dritten Rechenmittel dazu eingerichtet sind, infolge eines solchen Befehlssignals die Matrix G durch LU-Zerlegung in das Produkt LU umzuwandeln, wobei L und U eine Unterdreiecksmatrix bzw. eine Oberdreiecksmatrix von m x m Elementen darstellt, wobei die Elemente $L_{kk}$ und $U_{kk}$ gleich 1 sind mit k = 1,..., m, und wobei für die von dem Wert 0 abweichenden Elemente gilt, daß

$$U_{kk} = 1 + c^2, \qquad\qquad k = 1, \ldots\ldots, q$$

$$U_{kk} = 1 + c^2 - c^2/U_{k-q,k-q} \qquad\qquad k = q+1, \ldots, m$$

$$U_{k,k+q} = -c, \qquad\qquad k = 1, \ldots\ldots, m-q$$

$$L_{kk} = 1 \qquad\qquad k = 1, \ldots\ldots, q$$

$$L_{k,k-q} = -c/U_{k-q,k-q} \qquad\qquad k = q+1, \ldots, m$$

daß aus dem System $L\underline{y} = \underline{z}$, $\underline{y}$ gelöst wird und zwar entsprechend

$$y_k = \begin{cases} z_k, & k = 1, \ldots\ldots, q \\ \\ z_k - L_{k,k-q}\, y_{k-q} & k = q+1, \ldots\ldots, q \end{cases}$$

daß aus dem System $U\underline{\hat{x}} = \underline{y}$, $\underline{\hat{x}}$ gelöst wird und zwar entsprechend

$$\hat{x}_{m+1-k} = \begin{cases} y_{m+1-k}/U_{m+1-k,m+1-k} & k = 1, \ldots\ldots, q \\ \\ \dfrac{(y_{m+1-k} - U_{m+1-k,m+1-k+q} \cdot \hat{x}_{m+1-k+q}) +}{(U_{m+1-k,m+1-k})} & k = q+1, \ldots., m \end{cases}$$

7. Anordnung nach Anspruch 6, <u>gekennzeichnet durch</u> einen Tabellenspeicher zum Speichern vorbestimmter Werte von Elementen der L-Matrix und der U-Matrix des Produktes LU.

## Revendications

1. Procédé pour restaurer des échantillons d'un signal échantillonné à équidistance, lesquels échantillons sont considérés comme invalides, sur la base de valeurs de remplacement correctrices dérivées d'échantillons environnants qui sont considérés comme valides et qui se présentent au niveau d'un intervalle contenant les échantillons à restaurer, suivant lequel une séquence d'échantillons consécutifs $s_k$, dans laquelle k = 0, 1,..., N-1, qui comprend un jeu d'échantillons à restaurer est recueillie en se basant sur une périodicité prévue du segment de signal correspondant à cette séquence d'échantillons $s_k$,

et une quantité q, représentant un nombre d'échantillons et constituant une mesure de la périodicité dudit segment de signal, est déterminée sur la base de cette séquence d'échantillons $s_k$, caractérisé en ce que, pour une sous-séquence d'échantillons consécutifs $s_{t(i)}$, où $i = 1,..., m$, qui sont considérés comme invalides, est déterminé un vecteur de m $\underline{z}$, donné par : $z_k = -a(s_{t(i)-nq} + s_{t(i)+nq})$, où $s_{t(i)-nq}$ et $s_{t(i)+nq}$ représentent respectivement des échantillons situés dans des positions précédant et suivant de nq échantillons le i-ième échantillon $s_{t(i)}$, où n est un nombre entier et a représente une constante $-\frac{1}{2} < a < 0$ à choisir ;

qu'un système d'équations à m inconnues est formé par $G\hat{\underline{x}} = \underline{z}$, où G est une matrice m x m, donnée par :

$$G_{kl} = \begin{cases} 1, & k=1 & k,l = 1, \ldots, m \\ a, & |t(k) - t(1)| = q & k,l = 1, \ldots, m \\ 0, & \text{ailleurs} & k,l = 1, \ldots, m \end{cases}$$

où t(k) et t(l) représentent respectivement les positions du k-ième et du 1er échantillon invalide de la séquence $1,..., m$ et $\hat{\underline{x}}$ est un vecteur de m comportant les éléments $\hat{x}_i$, où $\hat{x}_i$ est un estimateur pour un échantillon invalide dans la position t(i), où $i = 1,..., m$, et

qu'à partir du système $G\hat{x} = \underline{z}$, les m valeurs de $\hat{x}_i$ sont déterminées d'une manière connue en soi.

2. Procédé suivant la revendication 1, dans lequel les échantillons à restaurer font partie d'un signal qui est échantillonné à une cadence $f_s$, caractérisé en ce que, pour le nombre N d'échantillons $s_k$, où $k = 0,..., N-1$, la valeur choisie est telle que ;

$$N = 2 f_s/f_{min} + m$$

où $f_{min}$ représente la fréquence qui correspond à la périodicité maximale prévue du segment de signal à restaurer et m représente le nombre d'échantillons à restaurer qui y sont contenus.

3. Procédé suivant la revendication 2, caractérisé en ce que la sous-séquence d'échantillons invalides $s_{t(i)}$ se rapportant à la séquence de N échantillons $s_k$ est choisie telle que :

$$q_{max} \leq t(i) \leq N-1-q_{max},$$

où $q_{max}$ est une quantité représentée par un nombre d'échantillons, qui constitue une mesure de la périodicité maximale prévue du segment de signal représenté par cette séquence et t(i) représente la position du i-ième échantillon de ladite sous-séquence.

4. Procédé suivant l'une quelconque des revendications précédentes, caractérisé en ce qu'il est vérifié si le nombre m d'échantillons invalides est supérieur ou inférieur à la quantité q + 1 ;

si $m \leq q$, $\hat{x}$ est choisi égal à $\underline{z}$, et

si $m \geq q + 1$, la matrice G est convertie par décomposition LU en le produit LU, où L et U représentent respectivement une matrice triangulaire inférieure et une matrice triangulaire supérieure de m x m éléments, dont les éléments $L_{kk}$ et $U_{kk}$ respectifs sont égaux à 1, où $k = 1,..., m$, tandis que pour les éléments qui diffèrent de cette valeur 0 :

$$\begin{array}{ll} U_{kk} = 1 + c^2, & k = 1, \ldots, q \\ U_{kk} = 1 + c^2 - c^2/U_{k-q,k-q} & k = q+1, \ldots, m \\ U_{k,k+q} = -c, & k = 1, \ldots, m-q \\ L_{kk} = 1 & k = 1, \ldots, q \\ L_{k,k-q} = -c/U_{k-q,k-q} & k = q+1, \ldots, m \end{array}$$

dont la solution est obtenue à partir du système $L\underline{y} = \underline{z}$, $\underline{y}$ conformément à :

$$Y_k = \begin{cases} z_k, & k = 1, \ldots\ldots\ldots, q \\ \\ z_k - L_{k,k-q}\, Y_{k-q} & k = q+1, \ldots\ldots, q \end{cases}$$

dont la solution est obtenue à partir du système $U\hat{\underline{x}} = \underline{y}$, $\hat{\underline{x}}$ conformément à :

$$\hat{X}_{m+1-k} = \begin{cases} Y_{m+1-k}/U_{m+1-k,m+1-k} & k = 1, \ldots\ldots, q \\ \\ \dfrac{(Y_{m+1-k} - U_{m+1-k,m+1-k-k+q} \cdot \hat{X}_{m+1-k+q})}{(U_{m+1-k,m+1-k})} + \\ & k = q+1, \ldots, m \end{cases}$$

5. Dispositif pour réaliser un procédé suivant la revendication 1, comprenant des moyens de détection qui indiquent si un échantillon appliqué doit être considéré comme étant valide ou comme étant non valide, et un moyen de stockage pour stocker une séquence d'échantillons consécutifs, qui comprend un jeu d'échantillons à restaurer, caractérisé par :

un premier moyen de calcul prévu pour déterminer la quantité q au départ d'un jeu d'échantillons qui sont détectés comme étant valides et qui sont stockés dans le moyen de stockage ;

un deuxième moyen de calcul prévu pour déterminer, pour des échantillons et des positions se trouvant à une distance de $n \cdot q$ échantillons avant et après un échantillon $s_{t(i)}$ placé dans une position i, les éléments du vecteur de m $\underline{z}$, et pour ces valeurs d'éléments à l'échelle à l'aide de la valeur absolue de la quantité a ;

un troisième moyen de calcul prévu pour calculer un nombre m de valeurs de remplacement d'échantillons comme estimations des échantillons à restaurer en réponse à l'introduction de signaux de sortie effectuée par le premier et le deuxième moyen de calcul.

6. Dispositif suivant la revendication 5, caractérisé par un comparateur pour comparer la valeur numérique de la quantité m qui représente le nombre d'échantillons à restaurer, à la valeur numérique de la quantité q, un signal d'ordre étant produit lorsque $m \geq q + 1$,

le troisième moyen de calcul étant prévu pour convertir, en réponse à un tel signal d'ordre, la matrice G, par décomposition LU, en le produit LU, où L et U représentent respectivement une matrice triangulaire inférieure et une matrice triangulaire supérieure de m x m éléments, dont les éléments $L_{kk}$ et $U_{kk}$ respectifs sont égaux à 1, où k = 1,..., m, tandis que pour les éléments différant de 0 :

$$U_{kk} = 1 + c^2, \qquad\qquad k = 1, \ldots\ldots, q$$
$$U_{kk} = 1 + c^2 - c^2/U_{k-q,k-q} \qquad k = q+1, \ldots\ldots, m$$
$$U_{k,k+q} = -c, \qquad\qquad k = 1, \ldots\ldots, m-q$$
$$L_{kk} = 1 \qquad\qquad k = 1, \ldots\ldots, q$$
$$L_{k,k-q} = -c/U_{k-q,k-q} \qquad k = q+1, \ldots\ldots, m$$

dont la solution est obtenue à partir du système $L\underline{y} = \underline{z}$, $\underline{y}$ conformément à :

$$Y_k = \begin{cases} z_k, & k = 1, \ldots\ldots\ldots, q \\ \\ z_k - L_{k,k-q}\, Y_{k-q} & k = q+1, \ldots\ldots, q \end{cases}$$

dont la solution est obtenue à partir du système $U\hat{\underline{x}} = \underline{y}$, $\hat{\underline{x}}$ conformément à :

$$\hat{x}_{m+1-k} = \begin{cases} Y_{m+1-k}/U_{m+1-k,m+1-k} & k = 1, \ldots\ldots, q \\ \\ \dfrac{(Y_{m+1-k} - U_{m+1-k,m+1-k+q} \cdot \hat{x}_{m+1-k+q}) +}{(U_{m+1-k,m+1-k})} & k = q+1, \ldots, m \end{cases}$$

7. Dispositif suivant la revendication 6, caractérisé par une mémoire de table pour stocker des valeurs prédéterminés des éléments de la matrice L et de la matrice U du produit LU.

FIG.1

FIG. 2

FIG. 3

FIG. 4

FIG. 5